(19) Europäisches Patentamt
European Patent Office
Office européen des brevets

(11) **EP 1 485 865 B1**

(12) **EUROPÄISCHE PATENTSCHRIFT**

(45) Veröffentlichungstag und Bekanntmachung des Hinweises auf die Patenterteilung:
**24.10.2007 Patentblatt 2007/43**

(51) Int Cl.:
**G06K 9/03** *(2006.01)*     **G06K 9/00** *(2006.01)*
**B07C 3/20** *(2006.01)*     **B07C 3/14** *(2006.01)*

(21) Anmeldenummer: 03714688.3

(22) Anmeldetag: **11.03.2003**

(86) Internationale Anmeldenummer:
**PCT/DE2003/000771**

(87) Internationale Veröffentlichungsnummer:
**WO 2003/079273 (25.09.2003 Gazette 2003/39)**

(54) **VERFAHREN UND VORRICHTUNG ZUM LESEN DER ADRESSEN VON SENDUNGEN**

METHOD AND DEVICE FOR READING THE ADDRESSES OF MAILINGS

PROCEDE ET DISPOSITIF DE LECTURE D'ADRESSES D'ENVOIS

(84) Benannte Vertragsstaaten:
**AT BE BG CH CY CZ DE DK EE ES FI FR GB GR HU IE IT LI LU MC NL PT RO SE SI SK TR**

(30) Priorität: **19.03.2002 DE 10212085**

(43) Veröffentlichungstag der Anmeldung:
**15.12.2004 Patentblatt 2004/51**

(73) Patentinhaber: **SIEMENS AKTIENGESELLSCHAFT**
**80333 München (DE)**

(72) Erfinder:
• **FUNCKE, Gerhard**
  **78467 Konstanz (DE)**
• **FUHRMANN, Hans**
  **78467 Konstanz (DE)**

(56) Entgegenhaltungen:
**DE-A- 1 449 649     US-B1- 6 351 574**

• **LOHMANN B: "REGELUNGSSTRUKTUR FÜR EINE KLASSE VON FÖRDER- UND BEARBEITUNGSPROZESSEN UND ANWENDUNG IN DER POSTAUTOMATISIERUNG" AUTOMATISIERUNGSTECHNIK - AT, OLDENBOURG VERLAG. MUNCHEN, DE, Bd. 44, Nr. 2, 1. Februar 1996 (1996-02-01), Seiten 52-56,58-60, XP000551818 ISSN: 0178-2312**

**EP 1 485 865 B1**

## Beschreibung

Die vorliegende Erfindung betrifft ein Verfahren zum Lesen der Adressen von Sendungen gemäß dem Oberbegriff des Anspruches 1 sowie eine Vorrichtung zum Durchführen des Verfahrens gemäß dem Oberbegriff des Anspruches 5.

Systeme zum automatischen Lesen von Adressen (OCR) sind auf dem Gebiet der Briefbearbeitung wohlbekannt und z.B. in der DE 195 31 392 C1 beschrieben. Mit modernen OCR-Briefsortieranlagen sind Bearbeitungsraten von 10 Briefen pro Sekunde, d.h. 36.000 Briefen pro Stunde und mehr erreichbar. Die Erkennungszuverlässigkeit variiert jedoch stark mit der Schriftart und Gesamtqualität der auf die Oberfläche der Briefe aufgebrachten Adressinformation. Im Falle einer erfolgreichen Erkennung kann der betreffende Brief mit einem maschinenlesbaren Barkode versehen werden. Dieser Barkode erlaubt eine weitere mechanische Bearbeitung bis zu einer beliebigen gewünschten Sortierordnung. Insbesondere ermöglicht die Verwendung von Barkodes eine Sortierung der Briefe bis zur Sortierebene der Gangfolge, bei der Briefe entsprechend der Reihenfolge ihrer Verteilung durch den Zusteller sortiert werden.

Da die Erkennungsraten der automatischen Lesesysteme sehr variieren, ist es notwendig, diese durch Videokodiereinrichtungen zu unterstützen. Hierbei werden die Videobilder der von dem OCR-Prozessor zurückgewiesenen Sendungen von Videokodierkräften an entsprechenden Videokodierplätzen manuell kodiert. Dabei werden die eingegebenen Adressen mittels eines Verzeichnisses in einen Sortierkode umgewandelt.

In Online-Videokodiersystemen (OVS) wird das Videobild dem Operator gezeigt, während die physikalische Sendung in verzögerungsstrecken gehalten wird. In diesen Verzögerungsstrecken wird normalerweise die Sendung in Bewegung gehalten für eine Zeitdauer, die ausreicht, damit der Operator die notwendige Sortierinformation für das betreffende Bild eingibt. Die üblichen Verzögerungsstrecken erlauben eine Verzögerung zwischen 10 und 30 Sekunden. Je länger die Verzögerungsstrecke, desto größer sind die Kosten sowie die Erfordernisse für Wartung und die physische Größe der Anlage.

Das Hauptproblem bei der Verwendung von OVS ist, dass die zur Verfügung stehende Zeit lediglich ausreicht für eine sorgfältige Eingabe der Postleitzahl (ZIP) oder des Postcodes (PC), es sei denn, dass unpraktikabel lange Verzögerungsstrecken verwendet werden.

Daher wurden spezielle Kodierverfahren entwickelt, um die notwendige Online-Verzögerungszeit möglichst gering zu halten.

Um die Kodierproduktivität zu erhöhen und/oder die Angabe von sämtlichen Adresselementen, d.h. ZIP/PC, Straße/Postfach, Adressat/Postfach, Adressat/Firma, zu ermöglichen, sind folgende wesentliche Methoden bekannt:

Vorschau-Kodierung

Bei der Vorschau-Kodierung erfolgt eine simultane Darstellung der Bilder von zwei Sendungen; eines über dem anderen. Hierbei ist das niedrigere Bild das aktive, d.h. dessen Daten kodiert werden. Nach einem geeigneten Training ist es Operatoren möglich, die Information auf dem unteren Bild zu kodieren, während sie bereits die Adressinformation vom oberen Bild aufnehmen. Das obere Bild wird anschließend aktiv und der Prozess wird fortgesetzt. Mit der Vorschau-Kodierung ist es möglich, durch eine vollständige Überlappung der kognitiven und motorischen Funktionen beim Kodieren aufeinanderfolgender Abbilder die Operator-Produktivität zu verdoppeln.

Extraktionskodierung

Da bei den praktisch erreichbaren Online-Verzögerungszeiten lediglich die ZIP/PC Adresselemente verlässlich vom Operator eingegeben werden können, werden beim Extraktionskodieren bestimmte Schlüsselbestandteile der sich auf die Straße beziehenden Adressbestandteils eingegeben. Üblicherweise basiert die Extraktionskodierung auf speziell entwickelten Regeln, bei denen ein Kode fester Länge, als Zugangsschlüssel zu einem Adressverzeichnis verwendet wird. Zum Beispiel verwendet die Royal Mail eine Extraktionsformel, die auf den ersten drei und den letzten zwei Buchstaben basiert. Dabei müssen Sonderregeln vom Operator auswendig gelernt werden, um überflüssige Adressinformationen zu vermeiden und bestimmte unterscheidende Merkmale wie z.B. Richtungen zu berücksichtigen, z.B. Ost, West oder Kategorien z.B. Street, Lane, Road.

Extraktionskodierung besitzt trotz ihrer gewissen Effektivität einige größere Nachteile; insbesondere komplexe Extraktionsregeln, die häufig die Berücksichtigung des Endes eines Straßennamens erfordern, während diese Bestandteile üblicherweise am unklarsten geschrieben sind. Außerdem findet man eine signifikant hohe Rate von nicht eindeutigen Extraktionen, bei denen mehrere Einträge in einem Verzeichnis dem Extraktionscode entsprechen, so dass keine eindeutige Sortierentscheidung getroffen werden kann. Weiterhin ist zu berücksichtigen, dass die Eingabeproduktivität der Operatoren vermindert wird, sobald vom Operator Entscheidungen getroffen werden müssen, statt einer einfachen repetitiven Tastatureingabe.

Offline Kodierung

Da bei keiner der oben erwähnten Kodierungstechniken eine ausreichend hohe Produktivität bei reiner Online-Kodierung erreicht wird, werden auch offline Kodiersysteme eingesetzt, wie in der US PS 49 92 649 beschrieben. Bei diesem System werden Sendungen mit nicht erkannten Adressen mit einer zusätzlichen Information, einer tracking identification (TID) versehen. Die nicht erkannten Sendungen werden extern gespeichert, während die Bilder dieser Sendungen Operatoren zum Kodieren präsentiert werden, wobei keine zeitlichen Einschränkungen vorliegen. Anschließend werden die Sendungen TID-Lesegeräten vorgeführt. Die TID wird mit der eingegebenen Adressinformation verknüpft. Darauf basierend kann auch eine übliche Barcode-Sortierinformation auf die Sendung aufgebracht werden, so dass die betreffende Sendung wie üblicherweise OCR-gelesene Sendungen bearbeitet werden kann. Obwohl das Offline-Video-Kodierverfahren eine effektive Methode zur Kodierung sämtlicher Adressbestandteile darstellt, werden zusätzlich Kapazitäten für die Weiterverarbeitung mit nichtgelesenen Adressen versehenen Sendungen und eine entsprechend komplexe Logistik verlangt.

Bekannt wurde in der US 4 632 252 auch ein Sortiersystem mit mehreren Sortierern, bestehend aus der Sortiersektion, Bildaufnahme und OCR-Einheit, und mehreren Kodierplätzen. Die in den OCR-Einheiten zurückgewiesenen Daten werden über eine verteileinheit den Videokodierplätzen zugewiesen. Die mittels Videokodierung korrigierten Daten werden dann über die Verteileinheit an die Sortierer, von denen die zurückgewiesenen Daten stammen, zurückgesandt.

Unter Einbeziehung der Häufigkeit der zurückgewiesenen Daten in jedem Sortierer und der Leistungsmerkmale der Videokodierplätze erfolgt die Auswahl der Videokodierplätze so, dass der Durchsatz möglichst hoch ist und die Kodierplätze möglichst hoch und gleichmäßig ausgenutzt sind. Durch diese Anordnung, bei der die einzelnen Sortierer und die Videokodierplätze nicht starr miteinander gekoppelt sind, ist es auch möglich, Zurückweisungsspitzen bei einem bestimmten Sortierer abzufangen.

Eine ähnlich flexible Zuordnung von bei der OCR zurückgewiesenen Daten zu Videokodierplätzen zeigt die US-B-6351574, bei der auch die Fehlerraten der Bediener ermittelt werden.

Zur Erhöhung der Leseleistung ist es auch bekannt, sämtliche nicht erfolgreich videokodierten Abbilder, d.h. bei denen die Kodierung nicht mit einem Eintrag in einem entsprechenden Adresswörterbuch übereinstimmt, ein zweites Mal zu videokodieren. Dies kann durch die gleiche Videokodierkraft (sie erhält eine zweite Chance zur Korrektur) oder durch eine andere Videokodierkraft erfolgen. Erst wenn auch dieser zweite Versuch fehlschlägt, wird dieses Abbild, bzw. das Leseergebnis endgültig zurückgewiesen. Hierbei ist also eine relativ große Kodierkapazität für die zweite Kodierung notwendig, zumal die Ursachen für die Nichtübereinstimmungen mit den Eintragungen der Adresswörterbücher neben den Kodierfehlern auch Fehler der Absender oder Fehler in den Adresswörterbüchern bzw. nicht aktuelle Adresswörterbücher sein können.

Die dargelegten Ausführungen zum Videokodieren gelten selbstverständlich auch für Leseeinrichtungen ohne einen automatischen OCR-Leser.

Der in den Ansprüchen 1 und 5 angegebenen Erfindung liegt die Aufgabe zugrunde, in einem Adresslesesystem mit mehreren Videokodierplätzen die Effektivität bei der Videokodierung so zu erhöhen, dass die Anzahl der ein zweites Mal zu videokodierenden Abbilder mit den Adressinformationen zur Einhaltung festgelegter Fehlerraten des Lesesystems reduziert wird.

Diese Aufgabe wird verfahrensgemäß durch die Merkmale des Anspruchs 1 und vorrichtungsgemäß durch die Merkmale des Anspruchs 5 gelöst.

Die Erfindung beruht auf dem Gedanken, das zweite Videokodieren nicht für alle beim ersten Videokodieren zurückgewiesenen Abbilder bzw. Kodierergebnisse, sondern nur für Zurückweisungen bestimmter Videokodierkräfte selektiv durchzuführen. Da die Qualität der Kodierungen der einzelnen Kodierkräfte unterschiedlich ist, wird in festgelegten Abständen eine aktuelle individuelle Fehlerrate für erstmalige Videokodierungen der einzelnen Videokodierkräfte ermittelt und in der Auftragsverteileinrichtung abgespeichert und die zweite Videokodierung erfolgt nur für die zurückgewiesenen Ergebnisse der entsprechend der einzuhaltenden Gesamtkodierfehlerrate festgelegten Videokodierkräfte mit den höchsten aktuellen individuellen Fehlerraten, da hierbei die größte Chance besteht, eine Korrektur von Kodierfehlern zu erzielen und die Leseperformance nachhaltig zu verbessern. Die zweiten Videokodierungen weisen relativ wenig Kodierfehler auf, weil diese von gerade freien Videokodierkräften mit den geringsten aktuellen individuellen Fehlerraten erledigt werden.

Vorteilhafte Ausgestaltungen der Erfindung sind in den Unteransprüchen dargestellt.

So ist es vorteilhaft, zur Verifizierung mit dem Kodierergebnis ein Adresswörterbuch zu durchsuchen und bei eindeutiger Zuordnung zu einem Eintrag das Kodierergebnis als eindeutig einzustufen.

Vorteilhaft ist es auch, zur Reduzierung des Personalaufwandes die gespeicherten Abbilder der die Adressen aufweisenden Sendungsoberflächen mindestens einer OCR-Einheit zum automatischen Lesen der Adressen und Generieren entsprechender Adresskodes zuzuführen und erst im Falle nicht eindeutiger Leseergebnisse der OCR-Einheit/en die betreffenden Abbilder das erste Mal zu videokodieren.

In einer weiteren vorteilhaften Ausgestaltung erfolgt die Auswahl und Festlegung der Anzahl der Videokodierkräfte, bei denen die Abbilder ein zweites Mal videokodiert werden, so, dass bei vorgegebener Fehlerrate der Vorrichtung zur Videokodierung der Kodieraufwand für die zweiten Videokodierungen oder die Fehlerrate der Vorrichtung zur Videokodierung bei festgelegtem maximalen Kodieraufwand für die zweiten Videokodierungen minimiert wird.

Im folgenden wird die Erfindung anhand von Zeichnungen beispielhaft dargestellt.

Dabei zeigt:

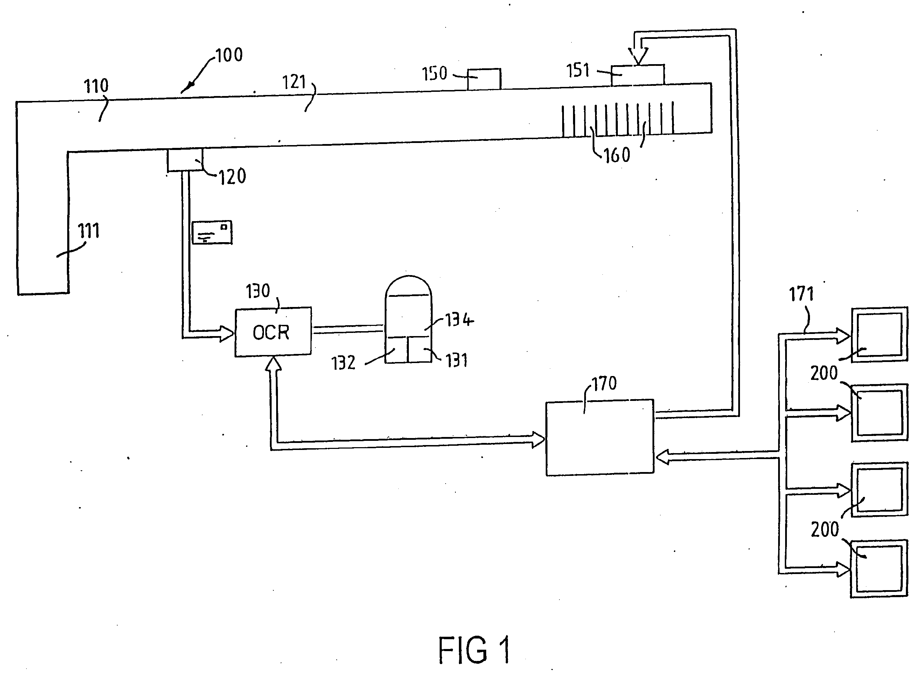

FIG 1    eine schematische Darstellung einer Vorrichtung zur Ausführung des Verfahrens.

FIG 1 zeigt eine schematische Darstellung einer Briefverteilanlage, mit der das erfindungsgemäße Verfahren ausgeführt werden kann. Ein OCR-Briefsortierer 100 besteht aus einer Zuführeinrichtung 110, die sukzessive Sendungen aus einem Magazin 111 abzieht und mit ca. 10 Sendungen pro Sekunde zu einem hochauflösenden Videoscanner 120 transportiert. Anschließend werden die Sendungen in einer Verzögerungsstrecke 121 transportiert. Die Sendungen weisen üblicherweise auf ihrer Oberfläche Adressinformationen auf. Im OCR-Prozessor 130 erfolgt eine Auswertung der Adressinformationen der Abbilder der Sendungen, die vom Videoscanner 120 gewonnen wurden. Im Fall einer vollständigen eindeutigen Auswertung wird ein Barkodedrucker 150 angesteuert und die Sendung wird mit einem entsprechenden Barcode für die anschließende Sortierung in Sortierfächer 160 versehen. Der OCR-Prozessor 130 besteht aus einem oder mehreren Mikroprozessoren 131 mit assoziiertem Speicher 132, um Abbilder der Sendungen zu speichern. Weiterhin beinhaltet der OCR-Prozessor 130 ein Adresswörterbuch 134 mit ZIP-Kodes, Städtenamen und Straßennamen und evtl. weiterer adressbezogener Information. Bei der Auswertung der Adressinformation aufweisenden Abbilder erfolgt eine merkmalsgesteuerte Reduktion der aus dem Adresswörterbuch 134 gewonnenen Eintragung, so dass eine Art Teilwörterbuch erzeugt wird. In einzelnen Eintragungen werden dabei Glaubwürdigkeiten zugeordnet, so dass bei der Auswertung eine Anzahl von Daten von richtig erkannten Adressen erzeugt werden. Die Vorrichtung enthält weiterhin eine Auftragsverteileinrichtung 170 sowie eine Anzahl Videokodierplätze 200, die mit der Auftragsverteileinrichtung 170 direkt oder durch ein lokales Netzwerk (LAN) 171 verbunden sind. Falls die OCR-Auswertung eines Abbildes nicht erfolgreich war, wird dieses Bild vom OCR-Prozessor 130 zur Auftragsverteileinrichtung 170 transferiert und dort in einer Datenbank abgespeichert. Die Auftragsverteileinrichtung 170 steuert einerseits den TID Barkodedrucker 151 und sendet andererseits das entsprechende Bild zu einem der Videokodierplätze 200. Der TID Barkodedrucker 151 bringt auf die entsprechende Sendung einen Identifikationscode TID auf, der es zu einem späteren Zeitpunkt ermöglicht, die ausgewertete Adressinformation mit der physikalischen Sendung zu verknüpfen. Die Auswertung der Abbilder erfolgt in diesem Fall offline, obwohl grundsätzlich bei einer genügend langen Verzögerungszeit auch eine online-Auswertung durch Videokodierung möglich ist. Im letzteren Fall kann der TID auch zu einem späteren Zeitpunkt, d.h. wenn die Videokodierung innerhalb einer bestimmten vorgegebenen Zeit nicht zu einer vollständigen Auswertung geführt hat, auf die Sendungen aufgebracht werden.

Nach der ersten Videokodierung wird das jeweilige Ergebnis mit Hilfe des Adresswörterbuches 134 verifiziert. Ist keine Übereinstimmung mit einem Eintrag zu verzeichnen, erfolgt wie noch beschrieben eine zweite Videokodierung.

In diesem Beispiel ist die Auftragsverteileinrichtung nur mit einem OCR-Briefsortierer 100 mit OCR-Prozessor 130 verbunden. Selbstverständlich ist die Kopplung auch mit mehreren OCR-Briefsortierern möglich.

Ist kein OCR-Prozessor vorhanden, so werden die im Videoscanner 120 erzeugten Abbilder direkt zur Auftragsverteileinrichtung 170 übertragen, dort in der Datenbank abgespeichert und an die Videokodierplätze 200 verteilt. Das zur Verifizierung notwendige Adresswörterbuch 134 ist dann Bestandteil der Auftragsverteileinrichtung 170.

Für jede identifizierte Videokodierkraft wird in festgelegten Abständen die Fehlerrate beim erstmaligen Videokodieren ermittelt. Dies geschieht halbautomatisch, indem z.B. bei zurückgewiesenen (nicht erfolgreiche Verifizierung anhand des Adresswörterbuches) Kodierungen in einer Nachkodierung festgestellt wird, ob die Ursache ein Eingabefehler der Kodierkraft oder eine Falschadressierung durch den Absender bzw. ein fehlerhafter Eintrag im Adresswörterbuch ist. Über einen festgelegten Zeitraum (siehe Tabelle 1) oder eine festgelegte Anzahl von Kodierungen wird dann statistisch die Fehlerrate ermittelt.

In der Tabelle 1 ist für 6 Kodierkräfte die Ermittlung der individuellen Fehlerrate aus der Anzahl der ersten Kodierungen in einer bestimmten Zeit und der Anzahl der Eingabefehler und die Ermittlung der Fehlerrate der Vorrichtung zur Videokodierung mit allen Videokodierplätzen dargestellt.

Tabelle 1

| Kodierkraft-Identifikation | A | B | C | D | E | F | Σ |
|---|---|---|---|---|---|---|---|
| Anzahl der Kodierungen n = | 100 | 120 | 100 | 80 | 100 | 120 | 620 |
| Anzahl der Kodierfehler f = | 2 | 4 | 12 | 1 | 1 | 8 | 28 |
| Kodierfehlerrate KFR [%] = f x 100/n | 2,0 | 3,3 | 12,0 | 1,2 | 1,0 | 6,7 | 4,516 |

Man kann aus dieser Tabelle 1 erkennen, dass rejektierte Abbilder der Videokodierkraft mit der Identifikation C ein zweites Mal videokodiert werden sollten, da die Wahrscheinlichkeit der Verbesserung der Fehlerrate des Gesamtsystems beim zweiten Videokodieren der rejektierten Abbilder von der Videokodierkraft C höher ist als bei Videokodierkräften mit geringer individueller Fehlerrate.

Bei der ausgewählten Videokodierkraft C und einer zweiten Videokodierung besteht ein Potential zur Verhinderung von 12 Fehlkodierungen. Sollen noch mehr Kodierfehler vermieden werden, so werden auch die von der Videokodierkraft F mit der zweithöchsten Fehlerrate (6,7%) stammenden, zurückgewiesenen Abbilder ein zweites Mal videokodiert, d.h. es besteht dann für den betrachteten Zeitraum ein Potential zur Vermeidung von 20 Kodierfehlern. Für die anderen Videokodierkräfte A,B,D,E ist diese Funktionalität abgeschaltet, da hierdurch kein wesentlicher Beitrag zur Verringerung der Gesamtfehlerrate erwartet werden kann. Damit die zweiten Videokodierungen mit möglichst wenig Kodierfehlern behaftet sind, werden sie von freien Videokodierkräften mit den geringsten Kodierfehlerraten ausgeführt, d.h. in diesem Fall von den Videokodierkräften E und D.

Soll eine bestimmte Gesamtkodierfehlerrate, z.B. 2% eingehalten werden, so werden die von den Videokodierkräften C und F stammenden zurückgewiesenen Abbilder ein zweites Mal videokodiert, da hierdurch das benötigte Verbesserungspotential relativ sicher bereitgestellt wird.

Dies ergibt sich aus folgenden Beziehungen:

$$\text{SKFR (Systemfehlerrate)} = (100/\Sigma n) \times (f_A + f_B + f_C + ...)$$

Eine Veränderungsgleichung lautet:

$$d(SKFD)/d(f) = 100/\Sigma n$$

Dies erlaubt die Zahl von Kodierfehlern zu berechnen, die vermieden werden müssen, damit die Systemkodierfehlerrate SKFD auf einen bestimmten Wert geändert werden kann.

$$d(f) = d(SKFD) \times \Sigma n/100$$

Das bedeutet in diesem Beispiel:

Soll die Systemkodierfehlerrate SKFR auf einen Wert von 2% reduziert werden, so muss der bisherige Wert von 4,516% um 2,516% verringert werden. Daraus ergibt sich

$$15,6 = 2,516 \times 620/100$$

Mindestens 15,6 Kodierfehler müssen also vermieden werden und somit müssen die Abbilder der Videokodierkräfte C und F oder C und B ein zweites Mal kodiert werden.

**Patentansprüche**

**1.** Verfahren zum Lesen der Adressen von Sendungen, bei dem die Abbilder der die Adressen aufweisenden Sendungsoberflächen aufgenommen, gespeichert und in einer Vorrichtung zur Videokodierung mit mehreren Videokodierplätzen videokodiert werden, wobei die Verteilung der entsprechenden Videokodieraufträge an die Videokodierplätze in einer Auftragsverteileinrichtung erfolgt, und jede Videokodierkraft an ihrem Videokodierplatz eine persönliche Kennung eingibt, die jeweils an die Auftragsverteileinrichtung gemeldet wird, **dadurch gekennzeichnet, dass** für jede Videokodierkraft in festgelegten Abständen eine aktuelle individuelle Fehlerrate für erstmalige Videokodierungen ermittelt und in der Auftragsverteileinrichtung abgespeichert wird und eine zweite Videokodierung nur für die nicht erstmalig erfolgreich von entsprechend der einzuhaltenden Gesamtkodierfehlerrate festgelegten Videokodierkräften mit den höchsten aktuellen individuellen Fehlerraten videokodierten Adressen durch gerade freie Videokodierkräfte mit den geringsten aktuellen individuellen Fehlerraten durchgeführt wird.

**2.** Verfahren nach Anspruch 1, **dadurch gekenn- zeichnet, dass** mit dem Kodierergebnis ein Adresswörterbuch durchsucht wird und bei eindeutiger Zuordnung zu einem Eintrag dieses Kodierergebnis als eindeutig eingestuft wird.

**3.** Verfahren nach Anspruch 1, **dadurch gekennzeichnet, dass** die gespeicherten Abbilder der die Adressen aufweisenden Sendungsoberflächen mindestens einer OCR-Einheit zum automatischen Lesen der Adressen und Generieren entsprechender Adresskodes zugeführt werden und dass erst im Falle nicht eindeutiger Leseergebnisse durch die OCR-Einheit/en die betreffenden Abbilder das erste Mal videokodiert werden.

**4.** Verfahren nach Anspruch 1 oder 2, **dadurch gekennzeichnet, dass** die Auswahl und Festlegung der Anzahl der Videokodierkräfte, bei denen die Abbilder mit den nicht erfolgreich videokodierten Adressen ein zweites Mal videokodiert werden, so erfolgt, dass bei vorgegebener Fehlerrate der Vorrichtung zur Videokodierung der Kodieraufwand für die zweiten Videokodierungen oder die Fehlerrate der Vorrichtung zur Videokodierung bei festgelegtem maximalen Kodieraufwand für die zweiten Videokodierungen minimiert wird.

**5.** Vorrichtung zur Durchführung des Verfahrens nach Anspruch 1, mit einem automatischen Adresslesesystem, das

- eine Vorrichtung zur Gewinnung von Abbildern von Sendungen (120) und deren Speicherung,
- eine Vorrichtung zur Videokodierung der die Adressinformationen enthaltenden Abbilder der Sendungsoberflächen mit mehreren Videokodierplätzen (200),
- eine Auftragsverteileinrichtung (179), die die Videokodieraufträge auf die einzelnen Videokodierplätze (200) verteilt, aufweist,

**dadurch gekennzeichnet, dass** die Auftragsverteileinrichtung (170) derart ausgebildet ist, dass jede Videokodierkraft an ihrem Videokodierplatz (200) eine persönliche Kennung eingibt, die an die Auftragsverteileinrichtung (170) gemeldet wird und dass für jede Videokodierkraft in festgelegten Abständen eine aktuelle individuelle Fehlerrate ermittelt und in der Auftragsverteileinrichtung abgespeichert wird und eine zweite Videokodierung nur für die nicht erstmalig erfolgreich von entsprechend der einzuhaltenden Gesamtkodierfehlerrate festgelegten Videokodierkräften mit den höchsten aktuellen individuellen Fehlerraten videokodierten Adressen durch gerade freie Videokodierkräfte mit den geringsten aktuellen individuellen Fehlerraten durchgeführt wird.

**6.** Vorrichtung nach Anspruch 5, **dadurch gekennzeichnet, dass** an die Vorrichtung zur Gewinnung von Abbildern von Sendungen (120) und deren Speicherung ein OCR-Prozessor (130) zum automatischen Lesen von Adressen angeschlossen ist, der außerdem mit der Auftragsverteileinrichtung (179) verbunden ist.

**Claims**

**1.** Method for reading addresses on items of mail, in which the images of the surfaces of the items of mail which have the addresses are recorded, stored and video coded in a device for video coding with a plurality of video coding stations, the corresponding video coding orders being distributed to the video coding stations in an order distributing device, and each member of the video coding personnel enters, at his video coding station, a personal identifier which in each case is signaled to the order distributing device, **characterized in that** a current individual error rate for initial video coding processes is determined for each member of the video coding personnel at defined interval and is stored in the order distributing device, and a second video coding process is carried out only for the video coded addresses which were not video coded successfully the first time by video coding personnel with the highest current individual error rates, defined in accordance with the overall coding error rate to be maintained, by video coding personnel who are free at that particular time and have the lowest current individual error rates.

**2.** Method according to claim 1, **characterized in that** an address directory is searched with the coding result and this coding result is classified as unambiguous if there is an unambiguous assignment to an entry.

**3.** Method according to claim 1, **characterized in that** the stored images of the surfaces of the items of mail which have the addresses are fed to at least one OCR unit for automatic reading of the addresses and generation of corresponding address codes, and **in that** the respective images are video coded the first time only if there are reading results by the OCR unit or units which are not unambiguous.

**4.** Method according to claim 1 or 2, **characterized in that** the number of video coding personnel for whom the images containing unsuccessfully video coded addresses are video coded a second time is selected and defined so that for a predefined error rate of the device for video coding the coding expenditure for the second video coding processes is minimized, or the error rate of the device for video coding is minimized given a defined maximum coding expenditure for the second video coding processes.

**5.** Device for carrying out the method according to claim 1, having an automatic address-reading system which has

- a device for acquiring images of items of mail (120) and storing them,
- a device for video coding the images of the surfaces of the items of mail containing the address information, said device having a plurality of video coding stations (200),
- an order distributing device (179) which distributes the video coding orders to the individual video coding stations (200),

**characterized in that** the order distributing device (170) is embodied in such a way that each member of the video coding personnel enters, at his video coding station (200), a personal identifier which is signaled to the order distributing device and **in that** a current individual error rate for initial video coding processes is determined for each member of the video coding personnel at defined intervals and is stored in the order distributing device, and a second video coding process is carried out only for the video coded addresses which were not video coded successfully the first time by video coding personnel with the highest current individual error rates, defined in accordance with the overall coding error rate to be maintained, by video coding personnel who are free at that particular time and have the lowest current individual error rates.

**6.** Device according to claim 5, **characterized in that** an OCR processor (130) for automatically reading addresses is connected to the device for acquiring images of items of mail (120) and storing them and is also connected to the order distributing device

**Revendications**

**1.** Procédé de lecture d'adresses d'envois, dans lequel les représentations des surface d'envoi qui comportent les adresses, sont reçues, mémorisées et vidéo-codées dans un dispositif de vidéo-codage à plusieurs postes de vidéo-codage, la répartition des tâches de vidéo-codage correspondantes entre les postes de vidéo-codage étant effectuée dans un dispositif de répartition de tâches, et chaque opérateur de vidéo-codage entrant à son poste de vidéo-codage une clé personnelle qui est envoyée à chaque fois au dispositif de répartition de tâches, **caractérisé en ce que** l'on détermine pour chaque opérateur de vidéo-codage, à des laps de temps déterminés, un taux d'erreur individuel actuel pour des vidéo-codages effectués la première fois, on mémorise ce taux d'erreur dans un dispositif de répartition de tâches et un deuxième vidéo-codage est effectué par des opérateurs libres dont le taux d'erreur individuel actuel est très faible seulement dans le cas où les adresses n'ont pas été vidéo-codées avec succès la première fois par des opérateurs dont le taux d'erreur individuel actuel est très élevé par rapport au taux d'erreur de codage total à respecter.

**2.** Procédé selon la revendication 1, **caractérisé en ce qu'**une recherche est effectuée dans un annuaire avec le résultat du codage et, en cas d'association claire à une entrée, ce résultat de codage est classé comme clair.

**3.** Procédé selon la revendication 1, **caractérisé en ce que** les représentations en mémoire des surfaces d'envoi comportant les adresses sont amenées à au moins une unité OCR pour lire automatiquement les adresses et pour générer des codes postaux correspondants, et **en ce que** lesdites représentations sont vidéo-codées la première fois par l'unité ou les unités OCR seulement dans le cas où les résultats de la lecture ne sont pas clairs.

**4.** Procédé selon la revendication 1 ou 2, **caractérisé en ce que** le choix et la détermination du nombre d'opérateurs, pour lesquels les représentations comportant les adresses qui n'ont pas été vidéo-codées avec succès sont vidéo-codées une deuxième fois, sont effectués de façon à minimiser, avec un taux d'erreur prescrit du dispositif de vidéo-codage, les dépenses de codage pour les deuxièmes vidéo-codages ou pour minimiser le taux d'erreur du dispositif de vidéo-codage avec une dépense de codage maximale prescrite pour les deuxièmes vidéo-codage.

**5.** Dispositif destiné à mettre en oeuvre le procédé selon la revendication 1, ledit dispositif comprenant un système de lecture automatique d'adresses qui comporte

- un dispositif d'obtention et de mémorisation de représentations d'envois (120),

- un dispositif de vidéo-codage des représentations des surfaces d'envois contenant des informations d'adresse, lequel dispositif comporte plusieurs postes de vidéo-codage (200),
- un dispositif de répartition des tâches (179) qui répartit les tâches de vidéo-codage entre les postes de vidéo-codage individuels (200),

**caractérisé en ce que** le dispositif de répartition des tâches (170) est conformé de telle sorte que chaque opérateur de vidéo-codage entre à son poste de vidéo-codage (200) une clé personnelle qui est envoyée au dispositif de répartition de tâches (170), et **en ce que** l'on détermine pour chaque opérateur de vidéo-codage, à des laps de temps déterminés, un taux d'erreur individuel actuel, on mémorise ce taux d'erreur dans le dispositif de répartition de tâches et un deuxième vidéo-codage est effectué par des opérateurs libres dont le taux d'erreur individuel actuel est très faible seulement dans le cas où les adresses n'ont pas été vidéo-codées avec succès la première fois par des opérateurs dont le taux d'erreur individuel actuel est très élevé par rapport au taux d'erreur de codage total à respecter.

6. Dispositif selon la revendication 5, **caractérisé en ce qu'**un processeur OCR (130), qui est relié au dispositif de répartition de tâches (179), est en outre raccordé au dispositif d'obtention et de mémorisation de représentations d'envois (120) afin de lire automatiquement des adresses.

**FIG 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19531392 C1
- US 4992649 A
- US 4632252 A
- US 6351574 B